# EUROPEAN PATENT APPLICATION

(11) **EP 4 838 723 A1**
(43) Date of publication of application: **11.11.2026**
(21) Application number: 25175261.4
(22) Date of filing: 09.05.2025
(51) Int. Cl.: H02B 11/127, H02B 11/167, H02B 3/00

(54) **TRUCK ASSEMBLY FOR WITHDRAWABLE ELECTRICAL UNITS**

(71) Applicant: ABB Schweiz AG, 5400 Baden (CH)
(72) Inventor: MAGNO, Giorgio, 24030 Brembate di Sopra (BG) (IT); MAGONI, Stefano, 24046 Osio Sotto (BG) (IT); GNATA, Enrico, 24123 Bergamo (IT)
(74) Representative: De Bortoli, Eros

(57) **Abstract**

A truck assembly for electrical switchgears, which comprises a first truck unit and a second truck unit mechanically coupled one to another and relatively movable one to another.

The first truck unit is structured to engage a fixed support structure of a switchgear, when said truck assembly is installed on said switchgear.

The second truck unit is structured to carry a withdrawable electrical unit of said switchgear and is reversibly movable relative to said first truck unit, along a predefined motion axis, when said truck assembly is installed on said switchgear.

The first truck unit comprises a first support member and a pair of first side members mechanically coupled to said first support member and arranged at opposite positions relative to said first support member, along a first axis perpendicular to the motion axis of said second truck unit. Each first side member can be reversibly moved, along said first axis, to a plurality of selectively adjustable positions relative to said first support member.

The second truck unit comprises a second support member mechanically coupled to the first support member of said first truck unit and comprises a pair of second side members mechanically coupled to said second support member and arranged at opposite positions relative to said second support member, along a second axis perpendicular to the motion axis of said second truck unit. Each second side member can be reversibly moved, along said second axis, to a plurality of selectively adjustable positions relative to said second support member.

## Description

The present invention relates to the field of electrical switchgears for low voltage (LV) or medium voltage (MV) electrical systems. More particularly, the present invention relates to a truck assembly for electrical switchgears including withdrawable electrical units.

Electrical switchgears are widely used in electric power transmission and distribution systems. As is known, in many applications, a switchgear includes an electrical unit (e.g. a circuit breaker, an earthing unit, a testing unit, and the like) of the withdrawable type, which can move relative to other fixed components (for example internal electric contacts) of the switchgear. Such a withdrawable electrical unit is typically mounted on a dedicated truck assembly that can slide along a compartment of the switchgear.

Generally, the size of a truck assembly for an electrical unit depends on the type and electric ratings of the electrical equipment to be carried, the size of the compartment where said electrical equipment has to be placed, the travel stroke allowed to the truck assembly, and so on. As an example, a truck assembly for a withdrawable vacuum circuit breaker operating at 12 kV may have a width of 500 mm and a travel stroke of 200 mm while a truck assembly for a vacuum circuit breaker operating at 24 kV may have a width of 850 mm and a travel stroke of 300 mm.

For the above reasons, nowadays, manufacturers of electrical equipment are obliged to arrange a variety of truck assemblies having different sizes in such a way to satisfy, from time to time, the installation requirements foreseen for a certain switchgear. Obviously, this circumstance entails higher industrial and commissioning costs, which may remarkably impact on the overall costs of an electrical system.

The main aim of the present invention is to provide a truck assembly for withdrawable electrical units to be installed in electrical switchgears, which allows overcoming or mitigating the above-described drawbacks of the state of the art.

Within this aim, a purpose of the present invention is to provide a truck assembly having high flexibility in use, so that it can easily satisfy different installation requirements on a switchgear. A further purpose of the present invention is to provide a truck assembly, which can be easily configured to be installed on a switchgear on the field or in an industrial production line.

A further purpose of the present invention is to provide a truck assembly having a relatively simple construction, which is relatively easy and cheap to manufacture at industrial level.

The above aim and purposes, as well as other purposes that will emerge clearly from the following description and attached drawings, are provided, according to the invention, by a truck assembly for electrical switchgears, according to the following claim 1 and the related dependent claims.

In a general definition, the truck assembly, according to the invention, comprises a first truck unit and a second truck unit mechanically coupled one to another and relatively movable one to another.

The first truck unit is structured to engage a fixed support structure of a switchgear, when said truck assembly is installed on said switchgear.

The second truck unit is structured to carry a withdrawable electrical unit of said switchgear and is reversibly movable relative to said first truck unit on a motion plane along a predefined motion axis, when said truck assembly is installed on said switchgear.

Preferably, said second truck unit comprises one or more wheels mounted on each second side member of said second truck unit.

Preferably, said second truck unit comprises an actuating member for actuating a shutter of said switchgear, which is mounted on each second side member of said second truck unit.

According to the invention, the first truck unit comprises a first support member and a pair of first side members mechanically coupled to said first support member and arranged at opposite positions relative to said first support member, along a first axis parallel to the motion plane and perpendicular to the motion axis of said second truck unit. Each first side member can be reversibly moved, along said first axis, into a plurality of selectively adjustable positions relative to said first support member.

According to the invention, the second truck unit comprises a second support member mechanically coupled to the first support member of said first truck unit and comprises a pair of second side members mechanically coupled to said second support member and arranged at opposite positions relative to said second support member, along a second axis parallel to the motion plane and perpendicular to the motion axis of said second truck unit. Each second side member can be reversibly moved, along said second axis, into a plurality of selectively adjustable positions relative to said second support member.

According to an aspect of the invention, the truck assembly comprises first driving means for moving said second truck unit relative to said first truck unit.

Preferably, said first driving means comprise at least an electric motor, for example a stepper electric motor or an electric motor (for example a DC brushed electric motor) equipped with an encoder. As an alternative, however, said first driving means can include a manual drive, a pneumatic drive or a hydraulic drive.

According to an aspect of the invention, each first side member of the first truck unit includes an engaging mechanism that can be reversibly actuated to engage or disengage the first side member with or from a fixed structure of the switchgear.

According to some embodiments of the invention, the first truck unit comprises, for each first side member, one or more first coupling rods mechanically coupling said first side member to said first support member. Each first coupling rod is fixed to the corresponding first side member and can slide relative to said first support member.

Preferably, said first support member comprises, for each first side member, a first locking mechanism interacting mechanically with a corresponding first coupling rod. Such a first locking mechanism can be reversibly actuated between an unlocking position, at which said first locking mechanism allows said first side member to move relative to said first support member, and a locking position, at which said first locking mechanism prevents said first side member to move relative to said first support member.

According to some embodiments of the invention, said first truck unit comprises, for each first side member, one or more first spacers interposed between said first support member and said first side member, when said first side member is in a position spaced apart from said first support member. Said one or more first spacers solidly couple said first support member and said first side member, when they are interposed between said first support member and said first side member.

According to some embodiments of the invention, said second truck unit comprises, for each second side member, one or more second spacers interposed between said second support member and said second side member, when said second side member is in a position spaced apart from said second support member. Said one or more second spacers solidly couple said second support member and said second side member, when they are interposed between said second support member and said second side member.

According to some embodiments of the invention, the second truck unit comprises, for each second side member, one or more second coupling rods mechanically coupling said second side member to said second support member. Each second coupling rod is fixed to the corresponding second side member and can slide relative to said second support member.

Preferably, said second support member comprises, for each second side member, a second locking mechanism interacting mechanically with a corresponding second coupling rod. Such a second locking mechanism can be reversibly actuated between an unlocking position, at which said second locking mechanism allows said second side member to move relative to said second support member, and a locking position, at which said second locking mechanism prevents said second side member to move relative to said second support member.

According to further embodiments of the invention, said second truck unit comprises, for each second side member, second driving means for moving said second side member relative to said second support member.

Preferably, said second driving means comprise at least an electric motor, for example a stepper electric motor or an electric motor (for example a DC brushed electric motor) equipped with an encoder.

Further characteristics and advantages of the invention will emerge from the description of preferred, but not exclusive, embodiments of the switchgear apparatus, according to the invention, non-limiting examples of which are provided in the attached drawings, wherein:
- Figure 1 shows a schematic partial view of an electrical switchgear including the truck assembly, according to the invention;
- Figures 2-4 show schematic views of an embodiment of the truck assembly, according to the invention, in different operating positions;
- Figures 5A, 5B, 6, 7A, 7B, 8-9, 10A-10B, 11 show schematic views of parts included in various embodiments of the truck assembly, according to the invention.

Referring to the cited figures, the present invention relates to a truck assembly 1 for an electrical switchgear 100 for low-voltage or medium-voltage electrical systems.

For the purposes of the present invention, the term "low voltage" (LV) relates to operating voltages lower than 1 kV AC and 1.5 kV DC whereas the term "medium voltage" (MV) relates to higher operating voltages up to some tens of kV, e.g. 70 kV AC and 100 kV DC.

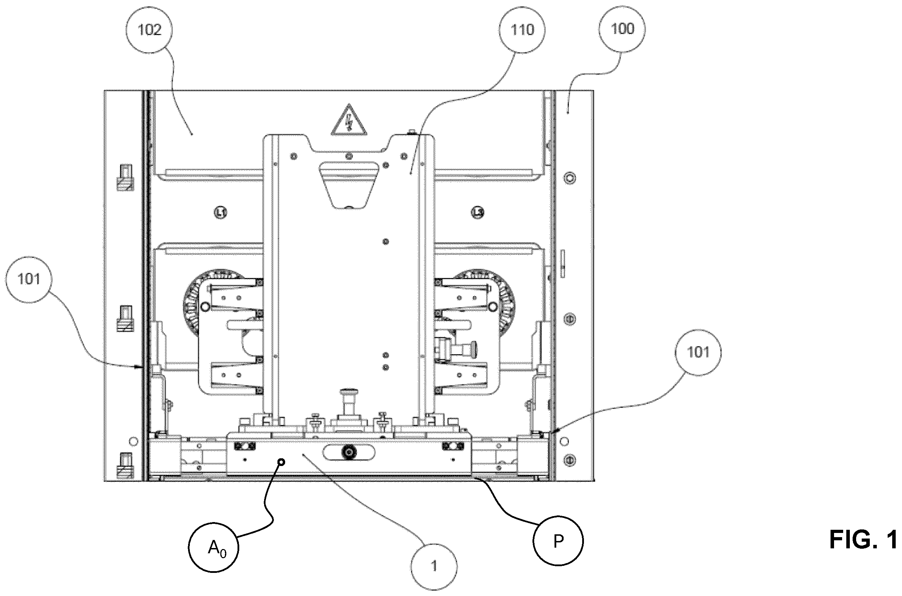

The switchgear 100 comprises a cabinet (partially shown in figure 1) internally divided into several compartments accommodating various electrical equipment.

At a compartment 102 of the cabinet, the switchgear 100 comprises a withdrawable electrical unit 110, for example a circuit breaker, an earthing unit, a testing unit, and the like.

The electrical unit 110 can be reversibly moved relative to fixed internal components of the switchgear on a motion plane P and along a predefined motion axis A₀, which are normally directed perpendicularly to a frontal side of the switchgear 100 (reference is made to a normal operating position of the switchgear). As an example, the electrical unit 110 can be reversibly moved between an inserted position, in which the electrical unit is electrically connected to some internal electric contacts of the switchgear, and a withdrawn position, in which the electrical unit is electrically disconnected and a predefined distance (travel stroke) from the internal electric contacts of the electrical switchgear.

In general, the electrical unit 110 and many other components of the switchgear 100 may be realized according to solutions of known type that are here not described for the sake of brevity. As shown in figure 1, the electrical switchgear 100 comprises a truck assembly 1, according to the invention, to carry the electrical unit 110 and to allow this latter to move relative to fixed components of the switchgear on the motion plane P (for example formed by a supporting wall of the compartment 102 where the truck assembly is placed) and along the motion axis A₀. According to the invention, the truck assembly 1 comprises a first truck unit 2 and a second truck unit 3, which, in general terms, are mechanically coupled one to another to form a single structure, even if they can move one relative to another.

The first truck unit 2 is structured to engage a fixed support structure 101 of the switchgear (for example a pair of lateral walls of the compartment 102 where truck assembly is placed), when the truck assembly is installed on the switchgear. In this way, the first truck unit 2 can form a fixed steady support for the second truck unit 3 that can move relative to it.

The second truck unit 3 is structured to carry the withdrawable electrical unit 110 and it can be moved relative to the first truck unit 2 (in fixed position), when the truck assembly is installed on the switchgear. In practice, the second truck unit 3 forms a movable base for the electrical unit 110 that can thus move relative to some fixed components of the switchgear.

When the truck assembly is installed on the switchgear, the second truck unit 3 can reversibly move relative to the first truck unit 2, along the motion axis A₀, between a first truck position T₁, at which the second truck unit 3 is in contact with the first truck unit 2, and an adjustable second truck position T₂, at which the second truck unit 3 is spaced apart from the first truck unit 2.

The first truck position T₁ of the second truck unit 3 generally corresponds to a withdrawn position of the switching unit 110 carried by the truck assembly whereas the adjustable second truck position T₂ of the second truck unit 3 can correspond to an inserted position of the electrical unit 110 or to any intermediate position of the electrical unit 110 between the above-mentioned inserted and withdrawn positions.

The distance between the above-mentioned first and second truck positions T₁, T₂, when the second truck unit reaches an inserted position, corresponds to the stroke of the truck assembly. According to the invention, the first truck unit 2 comprises a first support member 21 and a pair of first side members 22 mechanically coupled one to another (to form a single structure). The first side members 22 are arranged at opposite positions relative to the first support member 21, along a first axis A₁ parallel to the motion plane P and perpendicular to the motion axis A₀. According to the embodiments shown in the cited figures, the first truck unit 2 has a solid profiled structure extending along the first axis A₁. Such a profiled structure includes an elongated intermediate part forming the first support member 21 and a pair of opposite shorter side parts forming the first side members 22.

According to the invention, each first side member 22 is reversibly movable relative to the first support member 21, along the first axis A₁, into a plurality of positions that can be selectively adjusted by an operator.

In general terms, each first side member 22 is reversibly movable relative to the first support member 21 between a first position P₁, at which it is in contact with the first support member 21, and a selectively adjustable second position P₂, at which it is spaced apart from the first support member 21.

According to the invention, the second truck unit 3 comprises a second support member 31 and a pair of second side members 32 mechanically coupled one to another.

The second support member 31 of the second truck unit 3 is also mechanically coupled to the first support member 32 of the first truck unit 2.

The second side members 32 are arranged at opposite positions relative to the second support member 31, along a second axis A₂ parallel to the motion plane P and perpendicular to the motion axis A₀.

According to the embodiments shown in the cited figures, the second support member 31 has an open-box structure.

Referring to a normal installation position of the truck assembly (figure 1), the second support member 31 have a front wall 311 and a rear wall 313, which are spaced one from another and oriented perpendicular to the motion axis A₀, a pair of opposite side walls 312, which are spaced one from another and oriented in parallel to the motion axis A₀, and a bottom wall 314 perpendicular to the above-mentioned walls 311, 312, 313.

Preferably, the second support member 31 comprises a pair of support elements 315 oriented in parallel to the motion axis A₀, preferably arranged in proximity to the side walls 312. In some cases, the support elements 315 can form the side walls of the second support member 31. The support elements 315 support the electrical unit 110, when this latter is mounted on the second truck unit 3. Further, they support the second side members 32 and are mechanically coupled to the first support member 21 of the first truck unit 2.

Preferably, they are formed by solid elongated profiles anchored to the bottom wall 314 of the second support member 31.

According to the embodiments shown in the cited figures, each second side member 32 has a solid profiled structure extending along an axis perpendicular to the second axis A₂ and parallel to the motion axis A₀. In practice, each second side member 32 forms a flank of the second truck unit 3, which extends in parallel to a corresponding second wall 312 of the second support member 31.

Preferably, the second truck unit 3 comprises one or more wheels 36 mounted on each second side member 32. In this way, the movements of the second truck unit 3 relative to the first truck unit 2 are greatly facilitated.

Preferably, the second truck unit 3 comprises an actuating member 38 for actuating a shutter (not shown) of the switchgear, which is mounted on each second side member 32. In this way, the second truck unit 3 can cause the movement of a shutter of the switchgear, when it moves to a second truck position T₂, which may correspond to an inserted position of the electrical unit 110 carried by said second truck unit.

According to the invention, each second side member 32 of the second truck unit 3 is reversibly movable relative to the second support member 31 of the second truck unit 3, along the second axis A₂, into a plurality of positions that can be selectively adjusted by an operator.

In general terms, each second side member 32 is reversibly movable between a third position P₃, at which it is in contact with the second support member 31 (namely with the side walls 312 of this latter), and a selectively adjustable fourth position P₄, at which it is spaced apart from the second support member 31 (namely from the side walls 312 of this latter).

As mentioned above, the first and second truck units 2, 3 are mechanically coupled one to another while being movable one relative to another.

According to an aspect of the invention, the truck assembly 1 comprises first driving means 10, 11, 12 for moving the second truck unit 3 relative to the first truck unit 2, when the truck assembly is installed on the switchgear.

According to the embodiments shown in the cited figures, the above-mentioned first driving means comprises at least an electric motor 10, preferably a single electric motor 10 having an actuation shaft 10a.

Preferably, the electric motor 10 is mounted on the second support member 31 of the second truck unit 3, for example at the frontal wall 311 of this latter.

Preferably, the electric motor 10 is capable of controlling selectively an angular position of the actuation shaft 10a during the rotation.

Preferably, the electric motor 10 is a stepper electric motor. In this case, it incorporates *per se* control means capable of controlling selectively the angular position of the actuation shaft 10a during the rotation.

As an alternative, the electric motor 10 can be an electric motor (for example a brushless electric motor or a DC electric motor) equipped with an encoder. In this case, the electric motor 10 conveniently includes an electronic control circuit operatively associated to the encoder and configured to process the detection information provided by the encoder to control selectively the angular position of the actuation shaft 10a during the rotation.

Preferably, the truck assembly 1 comprises or can be operatively associated to a control unit (not shown) configured to control the operation of the electric motor 10. Such a control unit may include, for example, a PLC, a computer, or a similar device.

Preferably, the above-mentioned first driving means comprise one or more first actuation rods 11 mechanically coupling the first and second truck units 2, 3 and one or more first motion transmission mechanisms 12 mechanically coupling the one or more electric motors 10 with the actuation rods 11.

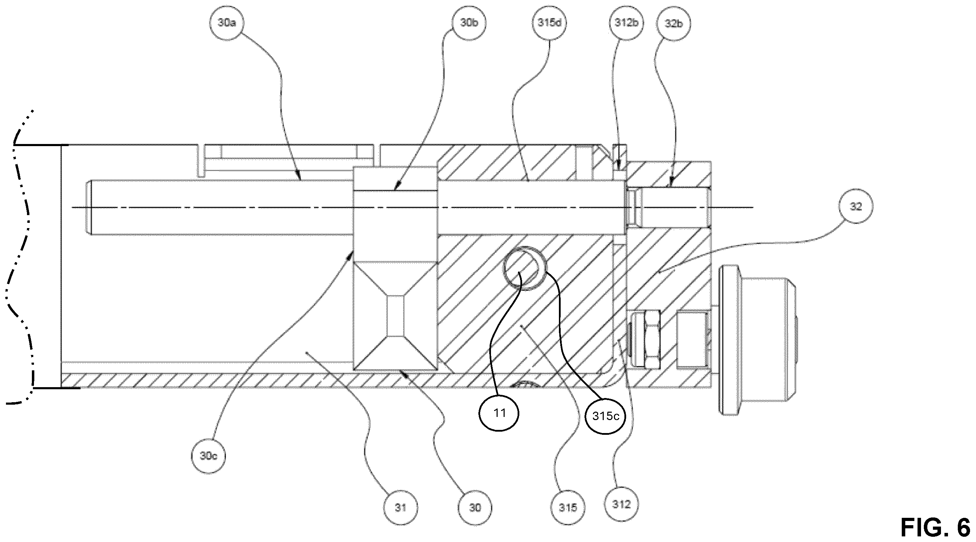

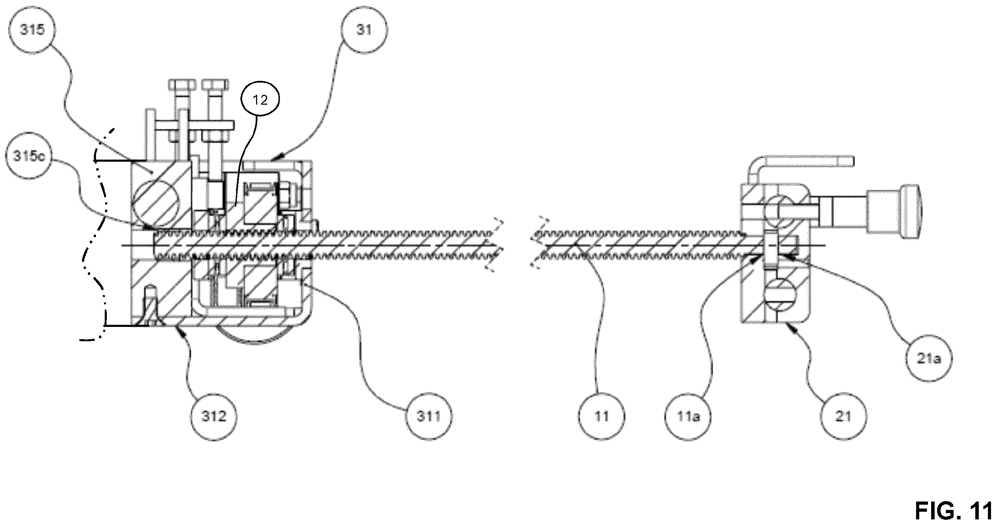

As shown in the cited figures, the truck assembly 1 can comprise a pair of first actuation rods 11 formed by parallel worm screws. The worm screws 11 join the first support member 21 of the first truck unit 2 and the second support member 31 of the second truck unit 3. Advantageously, the worm screws 11 are arranged at opposite sides of the electric motor 10. Each worm screw 11 has an end inserted in a corresponding threaded cavity 21a of the first support member 21 and is inserted in a corresponding threaded cavity 315c extending along a corresponding support element 315 of the second support member 31 (figures 6 and 11). Preferably, the one or more motion transmission mechanisms 12 are mounted on the second support member 31 of the second truck unit 3, for example at the frontal wall 311.

In the embodiments shown in the cited figures, the truck assembly 1 comprises a pair of first motion transmission mechanisms 12, each formed by a belt mechanism mechanically coupling the actuation shaft 10a of the electric motor 10 with a corresponding worm screw 11.

In other embodiments of the invention (not shown), however, the one or more first actuation rods 11 and one or more first motion transmission mechanisms 12 may be designed according to different solutions (even of known type), which are here not described in detail for the sake of brevity.

In further embodiments of the invention, the above-mentioned first driving means of the truck assembly can include a hydraulic drive or a pneumatic drive.

Yet in further embodiments of the invention, the above-mentioned first driving means of the truck assembly can be manually operated. In this case, the first driving means can include a manual drive mechanically coupled to the actuation rods 11 and arranged (preferably at the first support member 21) in such a way to be manually actuatable by an operator, for example by using a crank.

According to an aspect of the invention, each first side member 22 of the first truck unit 2 includes an engaging mechanism 220 that can be actuated by an operator to engage or disengage the first side member 22 with or from a fixed support 101 of the switchgear.

The engaging mechanism 220 of each first side member 22 may be manually operated by a user when the truck assembly is installed on the switchgear or removed from this latter.

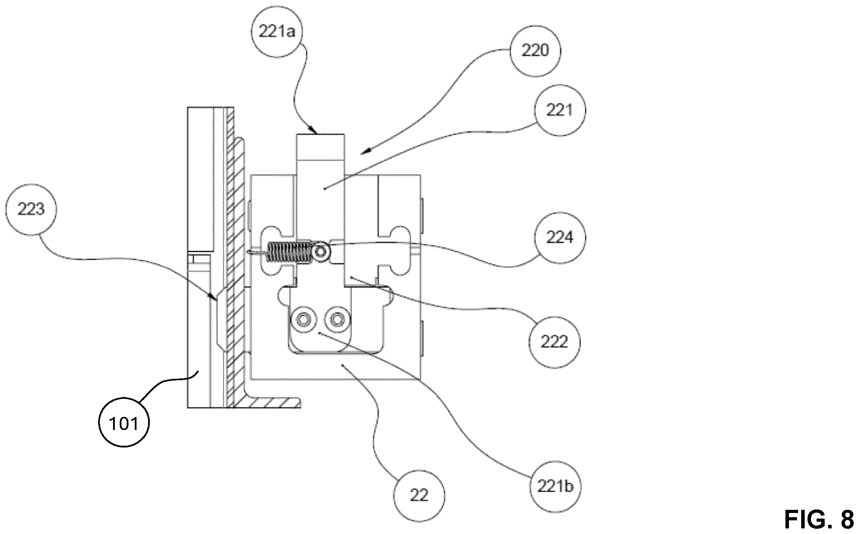

Referring to figure 8, according to the embodiments shown in the cited figures, each engaging mechanism 220 comprises a shaped lever 221 slidingly arranged in a cavity 222 of the corresponding first side member 22. The lever 221 has an end 221a, which protrudes from first side member 22 in such a way to be manually actuatable by an operator, and an opposite end 221b solidly coupled with a tab 223.

Each engaging mechanism 220 further comprises a contrast spring 224 operatively coupled the lever 221.

In a rest condition, the tab 223 protrudes from a side surface of the first side member 22. When an operator actuates the end 221a, the lever 221 translates in contrast with the spring 224 and the tab 223 moves into the cavity 222.

When the operator releases the lever 221, this latter returns in a rest position as it is actuated the contrast spring 224 and the tab 223 protrudes again from the first side member 22 to engage a suitable engaging cavity (not indicated) of the fixed support structure 101 of the switchgear. In other embodiments of the invention (not shown), however, the engaging mechanism 220 may be designed according to other solutions (even of known type), which are here not described in detail for the sake of brevity.

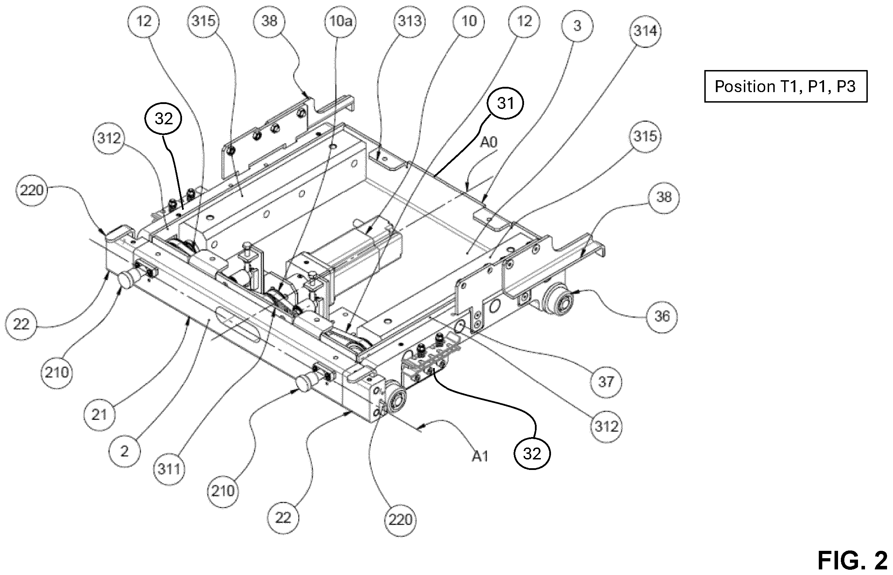

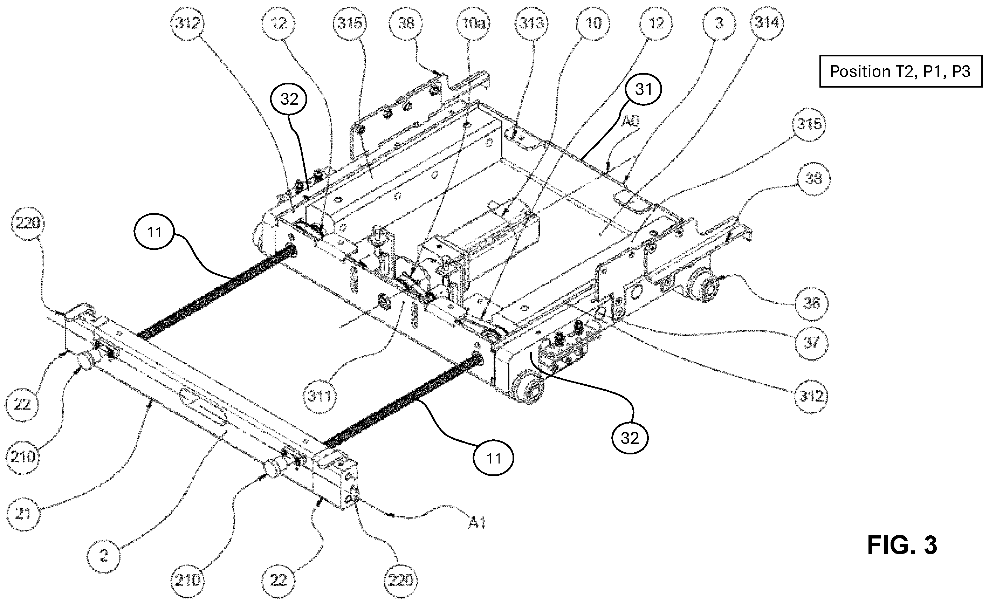

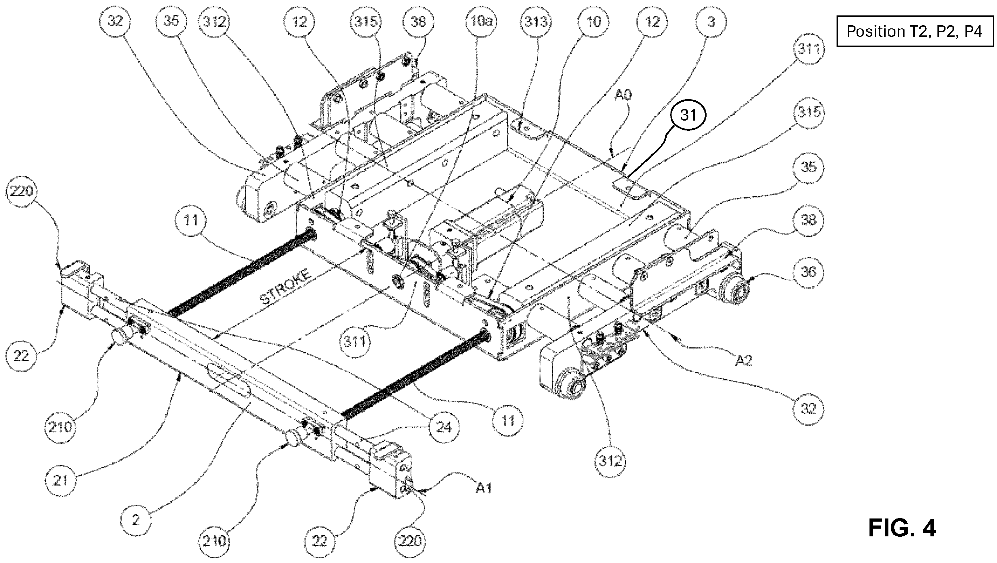

Figures 2-6 show embodiments of the invention, in which the first truck unit 2 comprises, for each first side member 22, one or more first coupling rods 24 that can slide relative to the first support member 21 and mechanically couple the corresponding first side member 22 to the first support member 21.

In the embodiments shown in the cited figures, the first truck unit 2 comprises a pair of first coupling rods 24 for each first side member 22. According to other embodiments of the invention (not shown), however, the first truck unit 2 can comprise, for each first side member 22, a single first coupling rod 24 or three or more first coupling rods 24.

The first coupling rods 24 are arranged in such a way to allow the first support member 21 of the first truck unit 2 to support the opposite first side members 22 and, at the same time, to allow the movement of the first side members 22 relative to the first support member 21.

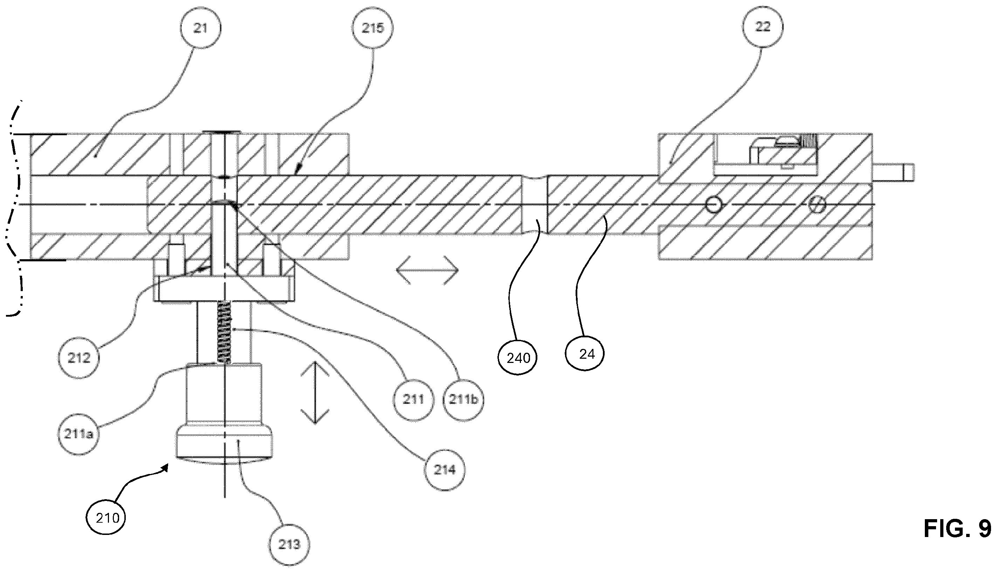

In the embodiments shown in the figures 2-6, each first coupling rod 24 has one end fixed to the corresponding first side member 22 of the first truck unit 2 and an opposite end slidably inserted in a cavity 215 extending along the first support member 21 of the first truck unit 2 (figure 9).

In the embodiments shown in figures 2-6, the first truck unit 2 comprises, for each second side member 32, a first locking mechanism 210 capable of mechanically interacting with a first coupling rod 24 to allow a selective adjustment of the position of the corresponding first side member 22 relative to the first support member 21.

Each first locking mechanism 210 is reversibly actuatable between an unlocking position, at which it allows the corresponding first side member 22 to move relative to the first support member 21, and a locking position, at which it prevents the corresponding first side member 22 to move relative to the first support member 21.

Each first locking mechanism 210 allows to move the corresponding first side member 22 in a plurality of positions P₁, ..., Pᵢ, ..., P₂ relative to the first support member 21, which can be selected by operating the corresponding first locking mechanism 210.

Referring to figure 9, each first locking mechanism 210 is operatively coupled to a first coupling rod 24 provided with a plurality of through holes 240 spaced one from another and distributed along the length of said coupling rod. Each hole 240 of the first coupling rod 24 corresponds to a selectable position of the corresponding first side member 22 relative to the first support member 21.

The first locking mechanism 210 includes a locking pin 211 arranged in a corresponding cavity 212 of the first support member 21 communicating with the cavity 215, in which the first coupling rod 24 is slidingly inserted.

The locking pin 211 has one end 211a, which is solidly coupled to a handle 213 protruding from the first support member 21 in such a way that it can be manually grasped by an operator, and an opposite free end 211b, which can fit in the holes 240 of the first coupling rod 24.

The first locking mechanism 210 includes a contrast spring 214 (schematically shown in figure 9) arranged in such a way to oppose to any movement of the locking pin 211 away from the first coupling rod 24.

When the first locking mechanism 210 is an unlocking position, the free end 211b of the locking pin 211 is not inserted in a hole 240 of the first coupling rod 24 and it is urged against outer surface of the first coupling rod 24 by the spring 214. In this situation, the first coupling rod 24 can slide along the corresponding cavity 212 of the first support member 21 and the corresponding first side member 22 can move relative to the first support member 21.

When the first locking mechanism 210 is a locking position, the free end 211b of the locking pin 211 is inserted in a hole 240 of the first coupling rod 24 and is maintained in this position by the spring 214. The locking pin 211 prevents the first coupling rod 24 to slide along the corresponding cavity 212 of the first support member 21, thereby preventing the corresponding first side member 22 to move relative to the first support member 21. The corresponding first side member 22 is locked in a given position relative to the first support member 21.

In order to select a position of the first side member 22 relative to the first support member 21, an operator can pull the handle 213 to actuate the first locking mechanism 210 from the locking position to the unlocking locking position and move the first side member 22 relative to the first support member 21. While the first side member 22 is sliding relative to the first support member 21, the locking mechanism 210 will remain in the above-mentioned unlocking position (thus allowing the movement of the first side member 22) until the locking pin 211 couples with a further hole 240 of the first coupling rod 24. In this situation, the locking mechanism 210 automatically returns in the above-mentioned locking position, thus preventing any movement of the first side member 22.

An operator can repeat the above-described manoeuvre until it is reached the desired position for the first side member 22 relative to the first support member 21.

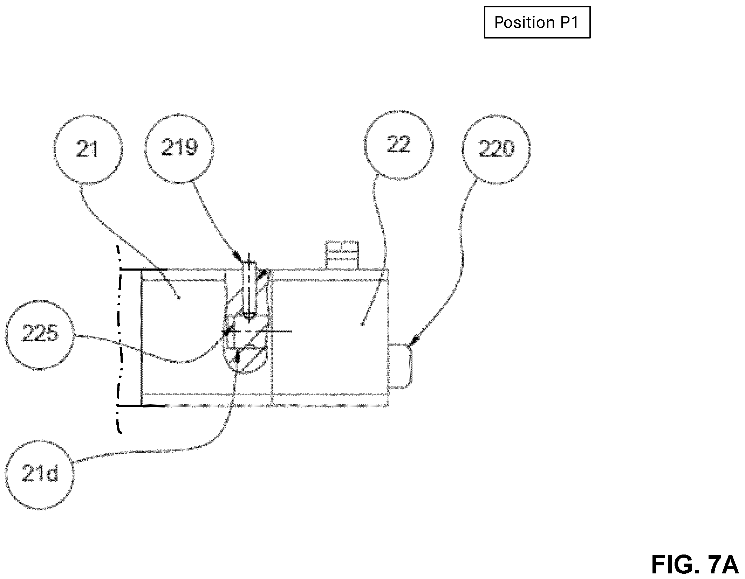

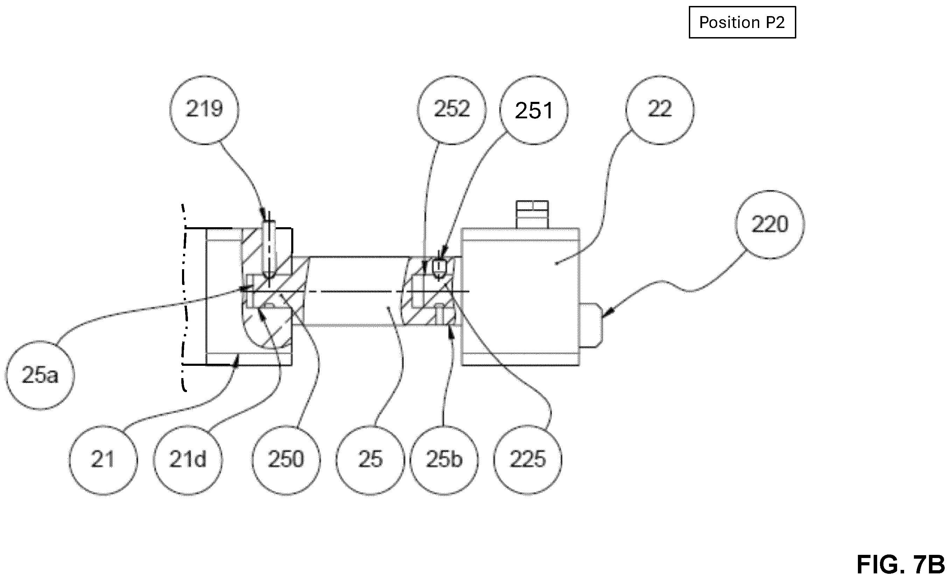

Figures 7A, 7B show an embodiment of the invention, in which the first truck unit 2 comprises, for each first side member 22, one or more first spacers 25 interposed between the first support member 21 and the first side member 22, when this latter is in a position P₂ spaced apart from the first support member 21.

Preferably, the first truck unit 2 comprises, for each first side member 22, a single first spacer 25 interposed between the first support member 21 and the first side member 22. According to other embodiments of the invention (not shown), however, the first truck unit 2 can comprise, for each first side member 22, a plurality of first spacers 25 interposed between the first support member 21 and the first side member 22.

When a first side member 22 is in a position P₂ spaced apart from the first support member 21, the one or more first spacers 25 mechanically couple the first support member 21 and the first side member 22 in such a way to form a single body.

According to the embodiments shown in figures 7A, 7B, when it has to be placed at a first position P₁ in contact with the first support member 21, each first side member 22 can be directly fixed to the first support member 21 (figure 7A).

Preferably, each first side member 22 comprises a coupling head 225 that can be inserted in a corresponding coupling cavity 21d of the first support member 21. The first side member 22 can be solidly fixed to the first support member 21 through a retaining mechanism 219 of the first support member 21, which can mechanically interact with the coupling head 225 of the first side member 22 to block this latter in its inserted position.

When each first side member 22 has to be placed at a position P₂, at which it is spaced apart from the first support member 21, a corresponding first spacer 25 can be fixed to the first support member 21 and the first side member 22 to couple solidly these latter (figure 7B). Preferably, at one end 25a, each first spacer 25 comprises a coupling head 250 that can be inserted in the coupling cavity 21d of the first support member 21. The spacer 25 can be solidly fixed to the first support member 21 through the retaining mechanism 219 that can mechanically interact with the coupling head 250 of the first spacer 25 to block this latter in its inserted position.

Preferably, at an opposite end 25b, each first spacer 25 comprises a coupling cavity 252, in which the coupling head 225 of the first side member 22 can be inserted. The first side member 22 can be solidly fixed to the first spacer 25 through a further retaining mechanism 251 of the first spacer 25, which can mechanically interact with the coupling head 225 of the first side member 22 to block this latter in its inserted position.

As it is evident from above, the position P₂ of the first side member 22 relative to the first support member 21 can be selectively adjusted by selecting a first spacer 25 having a length corresponding to the selected position P₂. Conveniently, a set of first spacers 25 of different lengths can be made available to an operator to allow this latter to select a position of the first side member 22 relative to the first support member 21, when the truck assembly is installed on the switchboard.

Figures 2-4 and 10A-10B show an embodiment of the invention, in which the second truck unit 3 comprises, for each second side member 32, one or more second spacers 35 interposed between the second support member 31 and the second side member 32, when this latter is in a position P₄ spaced apart from the second support member 31.

Preferably, the second truck unit 3 comprises, for each second side member 32, a plurality of second spacers 35. According to other embodiments of the invention (not shown), however, the second truck unit 3 can comprise a single spacer 35 for each second side member 32.

When a second side member 32 is in a position P₄ spaced apart from the second support member 31, each first spacer 35 mechanically couples the second support member 31 and the second side member 32 in such a way to form a single body.

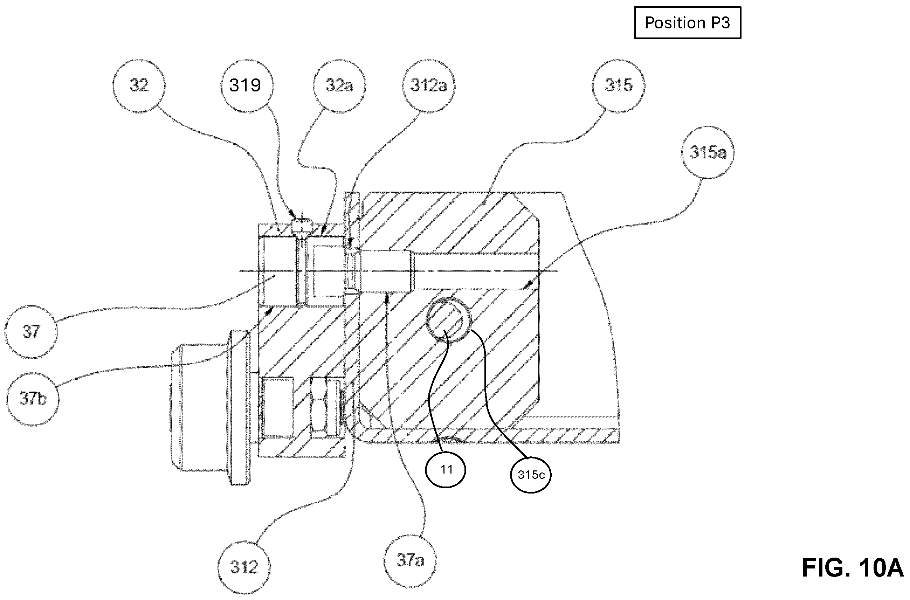

According to the embodiments shown in figures 2-4 and 10A-10B, when it has to be placed at a third position P₃, at which it is in contact with second support member 31, each second side member 32 can be directly fixed to the second support member 31 (figure 2, 10A`). Preferably, the second truck unit 3 comprises, for each second side member 32, a plurality of screw elements 37 to fix the second side member 32 to the second support member 31.

Each screw element 37 has a threaded pin 37a that can be inserted through a coupling cavity 32a of corresponding second side member 32 and an aperture 312a of a corresponding side wall 312. The threaded pin 37a of the screw element 37 can be screwed with a threaded cavity 315a of a corresponding support element 315.

The second side member 32 can be solidly fixed to the second support member 31 through a retaining mechanism 319 of the second support member 31. The retaining mechanism 319 can mechanically interact with a coupling head 37b of the screw element 37, which is accommodated in the coupling cavity 32a of the second side member 32.

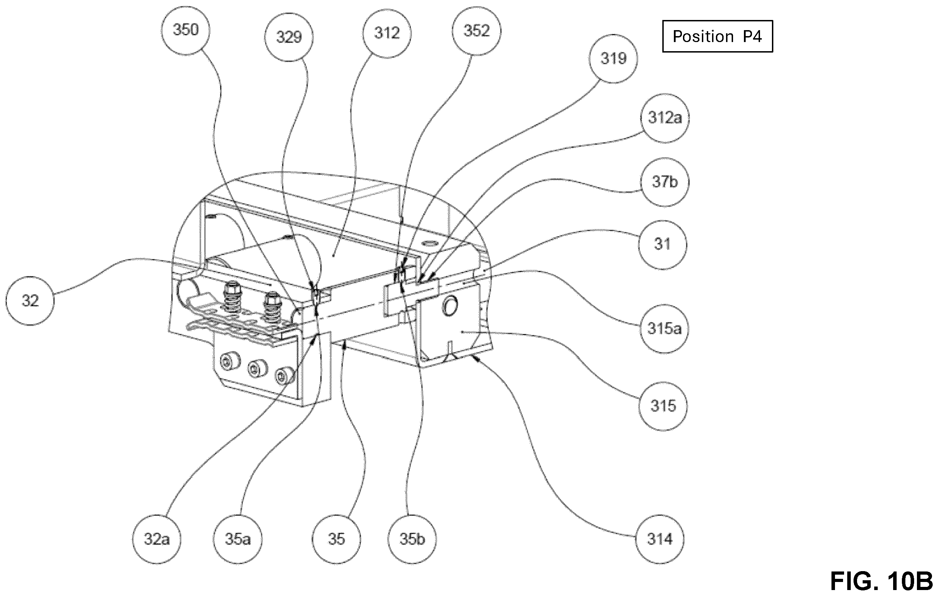

When each second side member 32 has to be placed at a position P₄, at which it is spaced apart from the second support member 31, a plurality of second spacers 35 can be fixed to the second support member 31 and the second side member 32 to couple solidly these latter (figure 10B). Preferably, at one end 35a, each second spacer 35 comprises a coupling head 350 that can be inserted in a coupling cavity 32a of the corresponding second side member 32. The spacer 35 can be solidly fixed to the second side member 32 through a retaining mechanism 329 of the second side member 32, which can mechanically interact with the coupling head 350 of the second spacer 35 to block this latter in an inserted position.

Preferably, at an opposite end 35b, each second spacer 35 comprises a coupling cavity 352, in which the coupling head 37b of a screw element 37 can be inserted. The threaded pin 37a of the screw element 37 can instead be inserted through an aperture 312a of the corresponding side wall 312 and it can be screwed with a threaded cavity 315a of a corresponding support element 315 of the first support member 315.

The second side member 32 can be solidly fixed to the second spacer 35 through a retaining mechanism 319 of the first support member 31, which can mechanically interact with the coupling head 37b of the screw element 37 to block this latter in an inserted position.

As it is evident from above, the position P₄ of the second side member 32 relative to the second support member 31 can be selectively adjusted by selecting first spacers 35 having a length corresponding to the selected position P₄. Conveniently, a set of second spacers 35 of different lengths can be made available to an operator to allow this latter to select a position of the second side member 32 relative to the second support member 31, when the truck assembly is installed on the switchboard.

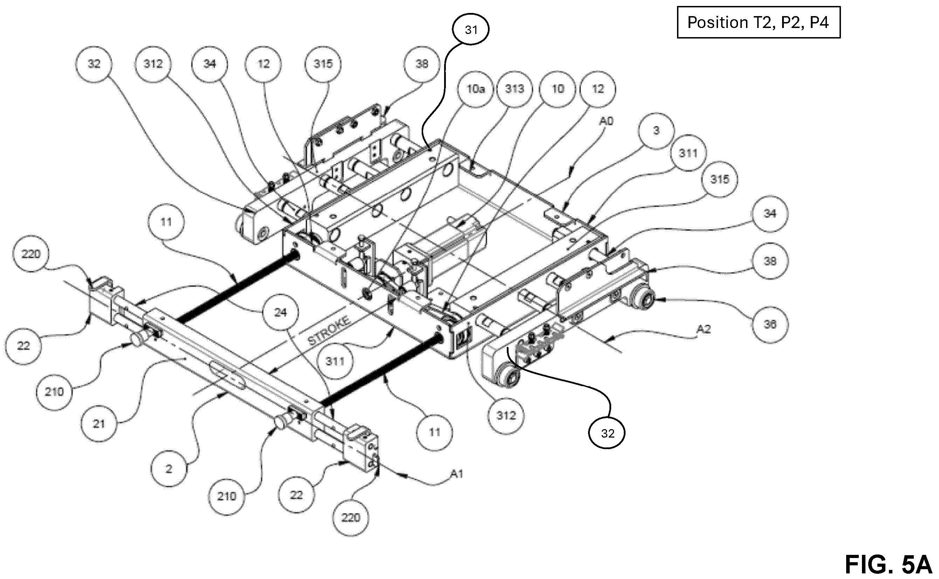

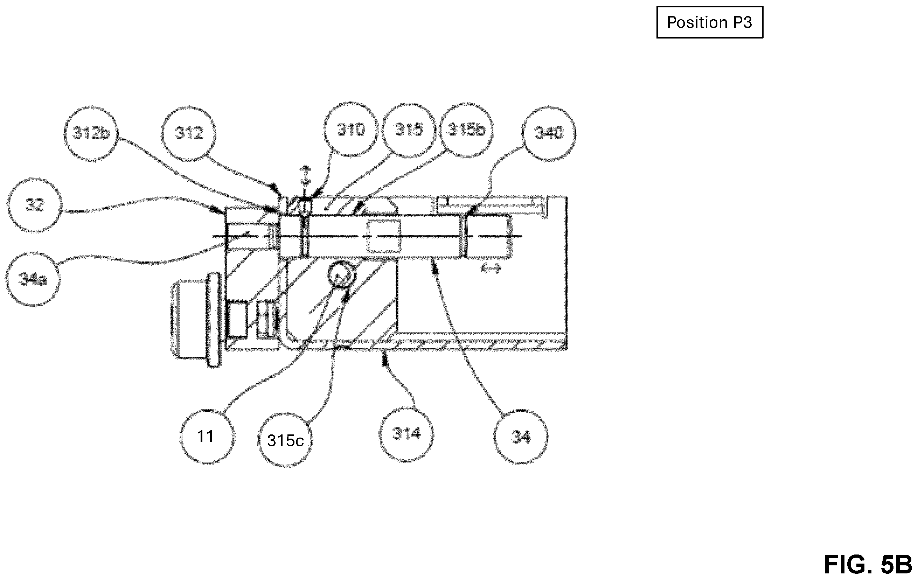

Figures 5A-5B show an embodiment of the invention, in which the second truck unit 3 comprises, for each second side member 32, one or more second coupling rods 34 mechanically coupling the second side member 32 to the second support member 31.

Preferably, the second truck unit 3 comprises a plurality of second coupling rods 34 for each second side member 32. According to other embodiments of the invention (not shown), however, the second truck unit 3 can comprise, for each second side member 32, a single second coupling rod 34.

The second coupling rods 34 are arranged in such a way to allow the support elements 315 of the second support member 31 to support the opposite second side members 32 and, at the same time, to allow the movement of the second side members 32 relative to the second support member 31.

In the embodiments shown in figures 5A-5B, each second coupling rod 34 has one end 34a fixed to a corresponding second side member 32 and it is slidably inserted in a coupling cavity 315b passing transversally through a corresponding support element 315.

In the embodiment shown in figures 5A-5B, the second truck unit 3 comprises, for each second side member 32, a second locking mechanism 310 capable of mechanically interacting with a corresponding second coupling rod 34 to allow a selective adjustment of the position of the corresponding second side member 32 relative to the second support member 31.

Each second locking mechanism 310 is reversibly actuatable between an unlocking position, at which it allows the corresponding second side member 32 to move relative to the second support member 31, and a locking position, at which it prevents the corresponding second side member 32 to move relative to the second support member 31.

Each second locking mechanism 310 allows to move the corresponding second side member 32 in a plurality of positions P₃, ..., Pⱼ, ..., P₄ relative to the second support member 31, which can be selected by operating said locking mechanism.

In the embodiments shown in figures 5A-5B, each second locking mechanism 310 is operatively coupled to a corresponding second coupling rod 34 provided with a plurality of through holes 340 spaced one from another and distributed along the length of said coupling rod. Each hole 340 of the second coupling rod 34 corresponds to a selectable position of the corresponding second side member 32 relative to the second support member 31.

Each second locking mechanism 310 can be arranged similarly to the first locking mechanisms 210 of the first truck unit 2, which have been described with reference to figure 9.

When it is in an unlocking position, each second first locking mechanism 310 does not have has its locking pin inserted in a hole 340 of the second coupling rod 34. In this situation, the second coupling rod 34 can slide along the cavity 315b of the corresponding support element 315 and the corresponding second side member 32 can move relative to the second support member 31.

When it is in a locking position, each second first locking mechanism 310 has its locking pin inserted in a hole 340 of the second coupling rod 34. In this situation, the locking mechanism 310 prevents the corresponding second coupling rod 34 to slide along the cavity 315b of the corresponding support element 315, thereby preventing the corresponding second side member 32 to move relative to the second support member 31. The corresponding second side member 32 is locked in a certain position relative to the second support member 31.

In order to select a position of a second side member 32 relative to the second support member 31, an operator can manually actuate the corresponding second locking mechanism 310 from the locking position to the unlocking locking position and move the second side member 32 relative to the second intermediate section 31. The locking mechanism 310 will remain in the above-mentioned unlocking position (thus allowing the movement of the second side member 32) until the respective locking pin couples with a hole 340 of the second coupling rod 34. In this situation, the locking mechanism 310 automatically returns in the above-mentioned locking position, thus preventing any movement of the second side member 32.

An operator can repeat the above-described manoeuvre until it is reached the desired position for the second side member 32 relative to the second support member 31.

According to the embodiment shown in figure 6, the truck assembly 1 comprises, for each second side member 32, second driving means 30, 30a, 30b for moving said second side member 32 relative to the second support member 31.

The above-mentioned second driving means 30, 30a, 30b can have a similar design compared to the first driving means 10, 11, 12 described above.

Preferably, the above-mentioned second driving means comprise an electric motor 30. Preferably, the electric motor 30 is capable of controlling selectively an angular position of the actuation shaft 30c (schematically shown in figure 6) during the rotation and it may be, for example, a stepper electric motor or an electric motor equipped with an encoder.

Preferably, the above-mentioned second driving means comprise one or more second actuation rods 30a mechanically coupling the second side member 32 and the second support member 31, more particularly the second side member 32 and a corresponding support element 315 of the second support member 31.

Preferably, each second actuation rod 30a is formed by a worm screw, which has an end inserted in a corresponding threaded cavity 32b of the second side section 32 and passes through a cavity 312b of a corresponding side wall 312 and a corresponding threaded cavity 315d that extends transversally a corresponding support element 315 of the second support member 31.

Preferably, the above-mentioned second driving means comprise one or more second motion transmission mechanisms 30b (schematically shown in figure 6), each mechanically coupling the actuation shaft 30c of the electric motor 30 with a corresponding worm screw 30a. Preferably, the one or more motion transmission mechanisms 30b (for example gear mechanisms) are mounted on the second support member 31 of the second truck unit 3, for example at the frontal wall 311.

The truck assembly, according to the invention, allows achieving the intended aims and objects. The truck assembly, according to the invention, can be easily configured to fit in switchgear compartments having different widths (measured along an axis parallel to the motion plane P and perpendicular to the motion axis A₀ of the truck assembly).

The width of the truck assembly can, in fact, be adapted to the size of a switchgear compartment by selecting the most appropriate position (relative to the first support member 21) of the first side members 22 of the first truck unit 2 and the most appropriate position (relative to the second support member 31) of the second side members 32 of the second truck unit 3.

As it is apparent from the description above, the configuration of the truck assembly can be carried out easily on the field, during the installation of the truck assembly. The truck assembly can be properly configured through simple manual manoeuvres by an operator, eventually using a suitable kit of spacers or activating suitable electric motors.

The truck assembly, according to the invention, shows a high flexibility in use, which allows satisfying the installation requirements of a large variety of switchgears.

Additionally, the truck assembly, according to the invention, results particularly useful for use in customized installation solutions or in retrofitting interventions on existing installations. As an example, the truck assembly, according to the invention, can be conveniently employed for building customized testing equipment during maintenance intervention.

The truck assembly, according to the invention, has a compact and relatively simple construction, which is relatively easy to assembly manufacture at industrial level, at competitive costs compared to the traditional solutions of the state of the art.

## Claims

1. A truck assembly (1) for an electrical unit (110) intended to be installed in an electrical switchgear (100),
wherein said truck assembly comprises a first truck unit (2) and a second truck unit (3) mechanically coupled one to another,
wherein said first truck unit (2) is structured to engage a fixed support structure (101) of said switchgear, when said truck assembly is installed on said switchgear,
wherein said second truck unit (3) is structured to carry said electrical unit (110) and is reversibly movable relative to said first truck unit (2) on a motion plane (P) along a motion axis (A₀), when said truck assembly is installed on said switchgear,
**characterised in that** said first truck unit (2) comprises a first support member (21) and a pair of first side members (22) mechanically coupled to said first support member, said first side members being arranged at opposite positions relative to said first support member (21), along a first axis (A₁) parallel to the motion plane (P) and perpendicular to the motion axis (A₀) of said second truck unit (3), each first side member (22) being reversibly movable, along said first axis (A₁), into a plurality of selectively adjustable positions (P₁, P₂) relative to said first support member (21),
and **characterised in that** said second truck unit (3) comprises a second support member (31) mechanically coupled to the first support member (21) of said first truck unit (2) and a pair of second side members (32) mechanically coupled to said second support member (31), said second side members being arranged at opposite positions relative to said second support member (31), along a second axis (A₂) parallel to the motion plane (P) and perpendicular to the motion axis (A₀) of said second truck unit (3), each second side member (32) being reversibly movable, along said second axis (A₂), into a plurality of selectively adjustable positions (P₃, P₄) relative to said second support member (31).

2. Truck assembly, according to claim 1, **characterised in that** it comprises driving means (10, 11, 12) for moving said second truck unit (3) relative to said first truck unit (2).

3. Truck assembly, according to claim 2, **characterised in that** said driving means (10, 11, 12) comprise at least an electric motor (10).

4. Truck assembly, according to one of the previous claims, **characterised in that** each first side member (22) of said first truck unit (2) includes an engaging mechanism (220) to engage or disengage said first side member (22) with or from the fixed structure (101) of said switchgear (100).

5. Truck assembly, according to one of the previous claims, **characterised in that** said first truck unit (2) comprises, for each first side member (22), one or more first coupling rods (24) mechanically coupling said first side member to said first support member (21), each first coupling rod being fixed to said first side member and slidable relative to said first support member.

6. Truck assembly, according to claim 5, **characterised in that** said first support member (21) comprises, for each first side member (22), a first locking mechanism (210) interacting with a first coupling rod (24), said first locking mechanism being reversibly actuatable between an unlocking position, at which said first locking mechanism allows said first side member (22) to move relative to said first support member (21), and a locking position, at which said first locking mechanism prevents said first side member (22) to move relative to said first support member (21).

7. Truck assembly, according to one of the claims from 1 to 4, **characterised in that** said first truck unit (2) comprises, for each first side member (22), one or more first spacers (25) interposed between said first support member (21) and said first side member (22) when said first side member is in a position (P₂) spaced apart from said first support member, said one or more first spacers (25) solidly coupling said first support member (21) and said first side member (22), when interposed between said first support member and said first side member.

8. Truck assembly, according to one of the previous claims, **characterised in that** said second truck unit (3) comprises, for each second side member (32), one or more second spacers (35) interposed between said second support member (31) and said second side member (32) when said second side member is in a position (P₄) spaced apart from said second support member, said one or more second spacers (35) solidly coupling said second support member (31) and said second side member (32), when interposed between said second support member and said second side member.

9. Truck assembly, according to one of the claims from 1 to 7, **characterised in that** said second truck unit (3) comprises, for each second side member (32), one or more second coupling rods (34) mechanically coupling said second side member to said second support member (31), each second coupling rod being fixed to said second side member and slidable relative to said second support member.

10. Truck assembly, according to claim 9, **characterised in that** said second support member (31) comprises, for each second side member (32), a second locking mechanism (310) interacting with a corresponding second coupling rod (34), said second locking mechanism being reversibly actuatable between an unlocking position, at which said second locking mechanism allows said second side member (32) to move relative to said second support member (31), and a locking position, at which said second locking mechanism prevents said second side member (32) to move relative to said second support member (31).

11. Truck assembly, according to one of the claims from 1 to 7, **characterised in that** said second truck unit (3) comprises, for each second side member (32), second driving means (30, 30a, 30b) for moving said second side member (32) relative to said second support member (31), wherein said second driving means comprise at least an electric motor (30).

12. Truck assembly, according to one of the previous claims, **characterised in that** said second truck unit (3) comprises one or more wheels (36) mounted on each second side member (22) of said second truck unit.

13. Truck assembly, according to one of the previous claims, **characterised in that** said second truck unit (3) comprises an actuating member (6) for actuating a shutter of said switchgear mounted on each second side member (32) of said second truck unit.

14. An electrical switchgear (100) comprising:
- an electrical unit (110) comprising one or more electric poles;
- a truck assembly (1), according to one or more of the previous claims, on which said electrical unit is mounted.
